# EUROPÄISCHE PATENTSCHRIFT

(11) **EP 4 047 199 B1**
(45) Veröffentlichungstag und Bekanntmachung des Hinweises auf die Patenterteilung: **01.07.2026**
(21) Anmeldenummer: 21211023.3
(22) Anmeldetag: 29.11.2021
(51) Int. Cl.: F02M 25/12, F02D 19/06, F02D 19/08, F02B 7/06, F01N 3/08, F02M 26/05, F01N 3/20, F01N 3/36, F02B 19/10

(54) **KRAFTSTOFFVERSORGUNGSEINRICHTUNG ZUM ZUFÜHREN EINES KRAFTSTOFFS UND EINE VERBRENNUNGSKRAFTMASCHINE**
FUEL SUPPLY DEVICE FOR SUPPLYING A FUEL AND A COMBUSTION ENGINE
DISPOSITIF D'ALIMENTATION EN CARBURANT PERMETTANT D'ALIMENTER EN CARBURANT ET MOTEUR À COMBUSTION INTERNE

(30) Priorität: 22.02.2021 CH 1792021
(43) Veröffentlichungstag der Anmeldung: 24.08.2022
(60) Teilanmeldung: 26180251.6
(73) Patentinhaber: Liebherr Machines Bulle SA, 1630 Bulle (CH)
(72) Erfinder: Dr. Seba, Bouzid, 1632 Broc (CH); Weiss, Ulrich, 1752 Villars-sur-Glâne (CH); Gobin, Pierre, 2350 Saignelégier (CH)
(74) Vertreter: Lorenz Seidler Gossel Part. mbB

(56) Entgegenhaltungen:
- EP-A2- 1 342 887
- EP-A2- 1 359 298
- WO-A1-2015/107972
- WO-A1-2018/185663
- WO-A1-2019/035718
- WO-A1-2020/230979
- FR-A1- 2 941 499
- US-A1- 2011 264 355
- US-A1- 2011 283 684

## Beschreibung

Die Erfindung betrifft eine Kraftstoffversorgungseinrichtung zum Zuführen eines Kraftstoffes an eine Verbrennungskraftmaschine.

Der Umstieg in eine regenerativbasierte Energiewirtschaft wird gesellschaftspolitisch zunehmend stärker eingefordert. Neben der Nutzung solcher auf Biomasse basierender Kraftstoffe, die bereits seit langem bis zu einem gewissen Anteil nachhaltig erzeugt werden, und der Elektromobilität, welche fahrzeugseitig die Einsatzmöglichkeit von regenerativ erzeugter elektrischer Energie bietet, existieren als weitere Kategorie solche Kraftstoffe, die durch elektrische Energie synthetisch erzeugt werden können. Letztere können selbstverständlich auch auf regenerativ basierter elektrischer Energie basieren.

Der bekannteste Vertreter solcher Kraftstoffe und zugleich von überragender technischer Bedeutung innerhalb dieser Kategorie ist der Wasserstoff. Sieht man von dem Ressourceneinsatz für die Produktionsstätten und das Verteilungssystem ab, kann Wasserstoff nahezu klimaneutral bereitgestellt werden. Wasserstoff kann in mobilen Brennstoffzellenantrieben und somit in tatsächlich emissionsfreien (Zero Emission) Fahrzeugen eingesetzt werden. Doch deutlich bessere wirtschaftliche Konkurrenzfähigkeit zu konventionellen Fahrzeugantrieben lässt sich durch den Einsatz von Wasserstoffverbrennungsmotoren erzielen, die extrem niedrige Schadstoffemissionen aufweisen. Gegenüber der Speicherung von Benzin und Dieselkraftstoff weisen die physikalischen Speicherverfahren von molekularem Wasserstoff den Nachteil auf, dass bei Letzterem die volumetrische Energiedichte deutlich niedriger ist und/oder ein solches Speichersystem sehr aufwendig ist.

Eine alternative Möglichkeit zur Kraftstoffspeicherung sind sogenannte Stoffspeicher. Zu den bekanntesten Arten solcher Wasserstoffstoffspeicher zählen flüssige, organische Wasserstoffträger. Es handelt sich hierbei um eine chemische Verbindung, die Kohlenstoff enthält und der man bei der sogenannten Hydrierung Wasserstoff zuführen kann. Bei einer späteren Dehydrierung kann der Wasserstoff wieder freigesetzt werden. Darauf aufbauend wurden bereits Wasserstofffahrzeuge entwickelt, bei denen der als Kraftstoff dienende Wasserstoff chemisch in einem anderen Stoff gebunden ist. Für die Bereitstellung des Wasserstoffes in seiner Molekularform für die Verbrennung ist eine sogenannte On-board-Reformierung im Fahrzeug erforderlich. Bei den vorbekannten Lösungen durchläuft der gesamte dem Kraftstofftank entnommene Kraftstoff auf seiner Hinführung zur Nutzung in der Verbrennungskraftmaschine diesen Reformierungsprozess. Je nach dem zur Anwendung kommenden spezifischen Reformationsprozess und der konkreten Ausführung der Reformierungsvorrichtung ergibt sich dadurch ein unterschiedlicher Bedarf an Prozessenergie und benötigtem Bauraum.

Die US 2011/283684 A1 sowie die US 2011/264355 A1 offenbaren jeweils bereits eine Brennkraftmaschine mit integriertem Reformator, der aus einem Primärkraftstoff einen Sekundärkraftstoff erzeugt. Beide Kraftstoffe werden entweder in den Ansaugkanal eingespritzt oder aber der reformierte Kraftstoff wird direkt in die Hauptbrennkammer eingespritzt. Aus der WO 2015/107972 A1 ist bekannt, Primär- und Sekundärkraftstoff beide in die Hauptbrennkammer einzuspritzen. Aus den beiden Druckschriften EP 1 359 298 A2 und WO 2019/035718 A1 ist es bekannt, einen Sekundärkraftstoff mittels eines Reformators zu erzeugen, der dann in eine Vorkammer des Verbrennungsmotors eingespritzt wird.

Die Aufgabe der vorliegenden Erfindung besteht darin, ausgehend von dem aus dem Stand der Technik bekannten Prinzip einen Weg aufzuzeigen, der den Aufwand bei der notwendigen On-board-Reformierung deutlich reduziert.

Die Aufgabe wird gelöst durch eine Kraftstoffversorgungseinrichtung gemäß den Merkmalen des Anspruchs 1. Vorteilhafte Ausführungen der Kraftstoffversorgungseinrichtung sind Gegenstand der abhängigen Ansprüche. Gelöst wird die Aufgabe entsprechend durch ein System gemäß Anspruch 15 sowie das Verfahren zur Kraftstoffversorgung einer Verbrennungskraftmaschine gemäß den Merkmalen des Anspruchs 16.

Erfindungsgemäß wird im Gegensatz zu der aus dem Stand der Technik vorbekannten On-board-Reformierung vorgeschlagen, lediglich einen verhältnismäßig kleinen Anteil des Primärkraftstoffes mittels einer integrierten Reformierungsvorrichtung in einen Sekundärkraftstoff zu reformieren. Der überwiegende Anteil des Kraftstoffes wird nicht reformiert, d.h. bleibt chemisch unbehandelt, und wird als Primärkraftstoff der Verbrennungskraftmaschine zur Verbrennung zugeführt. Zumindest ein Teil des unter Zuführung von Primärkraftstoff in der Reformierungsvorrichtung erzeugten ersten Reformats wird der Verbrennungskraftmaschine als Sekundärkraftstoff zugeführt. Auf diese Weise wird ein Dual-Kraftstoffmotor realisiert, wobei beide Kraftstoffarten aus dem gemeinsamen Kraftstofftank entstammen. Die Zuführung des mittels einer Reformierung bereitgestellten Sekundärkraftstoffes dient zur Optimierung des Verbrennungsprozesses und/oder ermöglicht gar erst das zuverlässige Zünden des Primärkraftstoffes. Insbesondere kann der Sekundärkraftstoff als Zündverstärker während des Verbrennungsprozesses fungieren. Auch kann der Sekundärkraftstoff dazu dienen, die Qualität des Primärkraftstoffes durch Beim ischung zu verbessern.

Zur Bereitstellung des Primär- und Sekundärkraftstoffes wird gemäß der Erfindung daher vorgeschlagen, einen gemeinsamen Kraftstofftank vorzusehen, der als gemeinsame Kraftstoffquelle für mindestens zwei unterschiedliche Kraftstoffzuführungspfade dient. Über den ersten Kraftstoffzuführungspfad ist der Kraftstofftank mit der Verbrennungskraftmaschine verbunden, um den im Speicher enthaltenen Primärkraftstoff ohne chemische Behandlung der Verbrennungskraftmaschine für die Verbrennung zuzuführen. Ein zweiter Kraftstoffzuführungspfad umfasst die vorab bereits angesprochene Reformierungsvorrichtung, die den aus dem Kraftstofftank, der im Folgetext als Primärkraftstoffspeicher bezeichnet wird, zugeführten Primärkraftstoff chemisch behandelt bzw. in der eine chemische Aufspaltung erfolgt und als erstes Reformat einen Sekundärkraftstoff bereitstellt. Dieser Sekundärkraftstoff wird stromabwärts der Reformierungsvorrichtung der Verbrennungskraftmaschine als Sekundärkraftstoff zugeführt, wobei der Sekundärkraftstoff in eine Vorkammer der Verbrennungskraftmaschine zuführbar ist. Ferner erfindungsgemäß ist eine Abgaszuführungsleitung vorgesehen, über die ein Abgasteilstrom des erzeugten Abgases der Verbrennungskraftmaschine durch die Reformierungsvorrichtung zur Erwärmung der aktiven Oberflächen des integralen Katalysators durchleitbar ist.

Erfindungsgemäß wird die Primärzündung in einem räumlich von dem Brennraum; für diesen Fall genauer ausgedrückt in einem räumlich von dem Hauptbrennraum getrennten Bereich bewirkt. Denkbar ist dies bei einer Ausführung der Verbrennungskraftmaschine mit wenigstens einem gespülten Vorkammerzündsystem, das im Folgetext zur Vereinfachung als gespülte Vorkammer bezeichnet wird. In diesem Fall kann der zweite Kraftstoffzuführungspfad zur Einbringung des Sekundärkraftstoffes in die gespülte Vorkammer geeignet ausgestaltet sein. Über eine Fluidverbindung zwischen der Vorkammer und dem Hauptbrennraum kann der in der Vorkammer ausgelöste Brennprozess eine Sekundärzündung innerhalb der Hauptkammer auslösen. Zudem schießt der noch nicht in der Vorkammer entzündete des Sekundärkraftstoff aus der Vorkammer in den Hauptbrennraum hinein und bildet dort räumlich voneinander getrennte Zündherde aus.

Insbesondere bei dem Einsatz einer gespülten Vorkammer lässt sich das Verbrennungsluftverhältnisses Lambda relativ genau bzw. sogar sehr genau auf einen gewünschten Wert einstellen. Sofern in der Vorkammer eine möglichst hohe Freisetzung von thermischer Energie gewünscht wird, die in Form der sogenannten Zündfackeln in den Hauptbrennraum hineinschiesst, wird darin ein stöchiometrisches Verbrennungsluftverhältnisses (Lambda = 1) angestrebt. Soll hingegen ein vergleichsweise hoher Anteil an noch nicht entzündetem Kraftstoff aus der Vorkammer in den Hauptbrennraum hineinschießen, um dort möglichst viele räumlich voneinander getrennte und/oder möglichst starke Zündherde auszubilden, kann in der Vorkammer ein Kraftstoffüberschuss (Lambda < 1) vorgesehen sein. Anstatt einer fortwährenden Unterscheidung zwischen *Brennraum* und *Hauptbrennraum* wird zur besseren Lesbarkeit im Folgetext nur noch der Begriff *Brennraum* verwendet und zwar auch dann, wenn es sich um eine mit Vorkammern ausgestattete Verbrennungskraftmaschine handelt.

Der erste Kraftstoffzuführungspfad kann für eine Zuführung des Primärkraftstoffes auf unterschiedliche Weise ausgelegt sein. Denkbar ist es, dass der Primärkraftstoff mittels des ersten Kraftstoffzuführungspfades einem Einspritzsystem der Verbrennungskraftmaschine zugeführt wird, insbesondere einem Hochdruckspeicher des Einspritzsystems. Mittels des Einspritzsystems kann der Primärkraftstoff direkt in die Brennräume eingespritzt werden. Alternativ könnte der erste Kraftstoffzuführungspfad ausgelegt sein, den Primärkraftstoff einem Saugrohr der Verbrennungskraftmaschine zuzuführen. Ist ein Luft-/Kraftstoffmischer vorgesehen, kann der erste Verbindungspfad auch mit diesem in Verbindung stehen.

Die Verbrennungskraftmaschine kann gemäß einer möglichen Ausführung mit einer Abgasnachbehandlungseinrichtung ausgestattet sein. Die Zugabe eines Reduktionsmittels bei der Abgasnachbehandlung ist bekannt. Ein vorteilhafter Ansatz der vorliegenden Erfindung besteht darin, dieses Reduktionsmittel aus dem Primärkraftstoffspeicher bereitzustellen. Vorstellbar ist es in diesem Zusammenhang, den Primärkraftstoff in seiner gespeicherten Form als Reduktionsmittel bereitzustellen. In diesem Fall kann ein weiterer Versorgungspfad vorgesehen sein, der ausgehend vom Primärkraftstoffspeicher als Quelle der Abgasnachbehandlungseinrichtung den unbehandelten Primärkraftstoff als Reduktionsmittel zuführt.

Unter Umständen kann es jedoch sinnvoll sein, nicht den Primärkraftstoff, sondern ein Reformationsprodukt der Reformierungsvorrichtung, insbesondere das erste Reformat, d.h. den Sekundärkraftstoff, als Reduktionsmittel der Abgasnachbehandlung zuzuführen. In diesem Fall weist der zweite Kraftstoffzuführungspfad wenigstens eine, stromabwärts der Reformierungsvorrichtung angeordnete Abzweigung auf, über die ein Teil des Sekundärkraftstoffes der Abgasnachbehandlungseinrichtung zuführbar ist. Auch könnte der weitere Versorgungspfad mit einer zusätzlichen, für die Erzeugung eines Reduktionsmittels aus dem Primärkraftstoff geeigneten Reformierungsvorrichtung erweitert sein.

Stromabwärts nach der Reformierungsvorrichtung kann gemäß vorteilhafter Ausführungsform wenigstens ein Sekundärkraftstoffspeicher vorgesehen sein. Mittels des Sekundärkraftstoffspeichers kann zumindest temporär ein konstantes Druckniveau des Sekundärkraftstoffes bei der Zuführung zur Verbrennungskraftmaschine bereitgestellt werden, und zwar unabhängig vom Betrieb der Reformierungsvorrichtung. Der Sekundärkraftstoffspeicher kann beispielsweise als Druckspeicher ausgeführt sein. Insbesondere ist die Integration eines Sekundärkraftstoffspeichers sinnvoll, wenn die Reformierungsvorrichtung unter bestimmen Betriebsbedingungen nicht oder nur eingeschränkt arbeitet. Ein Beispiel dafür ist bspw. der Kaltstart der Verbrennungskraftmaschine. Je nach dem für das erfindungsgemäße System vorgesehenen Primärkraftstoff, d.h. der erforderlichen chemischen Reaktion und dem Oberflächenmaterial des Katalysators in der Reformierungsvorrichtung ist für deren Ingangsetzung ein bestimmtes Temperaturniveau notwendig. Insbesondere die aktive Oberfläche der Reformierungsvorrichtung muss die notwendige Reaktionstemperatur aufweisen. Unmittelbar nach dem Kaltstart liegen die thermischen Voraussetzung möglicherweise nicht vor, so dass während dieser Zeitspanne die Versorgung mit Sekundärkraftstoff ausschließlich aus dem Sekundärkraftstoffspeicher erfolgen kann. Auch ist vorstellbar, dass unter gewissen Lastbedingungen der Verbrennungskraftmaschine der Reformierungsprozess temporär zu deaktivieren ist bzw. gar nicht möglich ist. Zur Überbrückung einer solchen temporären Deaktivierung kann eine Versorgung der Verbrennungskraftmaschine aus dem Sekundärkraftstoffspeicher erfolgen.

Wie bereits vorstehend angedeutet, kann der Sekundärkraftstoff als Reduktionsmittel für eine Abgasnachbehandlung Verwendung finden. In diesem Fall kann es sinnvoll sein, einen Sekundärkraftstoffspeicher als Quelle hierfür einzusetzen. Der benötigte Abzweig des zweiten Versorgungspfades ist dann stromabwärts nach dem Sekundärkraftstoffspeicher angeordnet.

Denkbar ist es auch, wenigstens einen Kompressor bzw. eine Pumpe stromabwärts nach der Reformierungsvorrichtung einzubinden, um den Sekundärkraftstoff auf ein höheres Druckniveau anzuheben und diesen unmittelbar in die Vorkammer oder in den Brennraum der Verbrennungskraftmaschine einzuspitzen. Bevorzugt wird der mittels eines Kompressors bzw. einer Pumpe auf ein höheres Druckniveau angehobene Sekundärkraftstoff innerhalb eines Sekundärkraftstoffspeichers, der dann als Druckspeicher ausgeführt sein kann, gespeichert und von dort aus in die Vorkammer oder in den Brennraum der Verbrennungskraftmaschine zugeführt. Alternativ oder ergänzend besteht solche eine Anordnung, womit der Vorkammer bzw. dem Brennraum der Verbrennungskraftmaschine bei Verfügbarkeit Sekundärkraftstoff unmittelbar von einem Kompressor bzw. einer Pumpe oder aus dem Sekundärkraftstoffspeicher zugeführt werden kann.

Der Primärkraftstoff kann ein flüssiger oder gasförmiger Kraftstoff, insbesondere ein Niederdruckgas, sein. Der Primärkraftstoffspeicher kann als Behälter zur Speicherung eines flüssigen und/oder gasförmigen Primärkraftstoffes ausgelegt sein. Handelt es sich bei dem Primärkraftstoff um einen gasförmigen Kraftstoff, wird bevorzugt ein Flüssiggasspeicher als Primärkraftstoffspeicher eingesetzt. Sofern der Primärkraftstoff im Primärkraftstoffspeicher in Flüssigform vorliegt, erfolgt bevorzugt bereits eine Verdichtung bevor dieser ggf. in die Gasphase übergeht. Bei der Ausführung des Primärkraftstoffspeichers als Flüssiggasspeicher bzw. Flüssigspeicher kann wenigstens eine Kraftstoffförderpumpe im Inneren des Kraftstofftank Primärkraftstoffspeichers integriert sein. Bevorzugt stellt eine solche Kraftstoffförderpumpe auf ihrer Oberdruckseite einen Druck bereit, der das notwendige Druckniveau, welches für die Kraftstoffförderung bis zur Verbrennungskraftmaschine erforderlich ist, deutlich übersteigt, so dass bereits im flüssigen Aggregatszustand des Primärkraftstoffes eine weitere Verdichtung erreicht wird. Besonders bevorzugt fördert die Förderpumpe mit einem Ausgangsdruckniveau von mindestens 50 bar. Optional kann ein höheres Druckniveau durch Hinzunahme weiterer Pumpen und/oder Kompressoren erzielt werden.

Vorteilhaft ist die Verwendung von Ammoniak (NH₃) als Primärkraftstoff, da der zur Herstellung benötigte Wasserstoff sowie die zur Hydrierung benötigte Prozessenergie zumindest überwiegend durch elektrische, insbesondere regenerativ generierte Energie erzeugt werden kann. Aus Ammoniak lässt sich mittels der Reformierungsvorrichtung als erstes Reformat molekularer Wasserstoff, der als Sekundärkraftstoff verwendet werden soll, gewinnen. Der während des Reformierungsprozesses als zweites Reformat erzeugte Stickstoff kann nach einer ggf. erforderlichen einfachen Nachbehandlung an die Umwelt abgegeben werden oder prinzipiell für eine spätere Verwendung in einem gesonderten Speicher des Fahrzeuges aufgefangen werden. Da die Erdatmosphäre einen Sickstoffanteil von ca. 80 % aufweist, wird Ersteres bevorzugt.

Grundsätzlich kann ein neben dem Sekundärkraftstoff als erstes Reformat erzeugtes weiteres Reformat auch in einem zusätzlichen Speichermittel gespeichert werden, welches dem Primärkraftstoffspeicher angegliedert sein kann, bspw. indem eine Ausführung als Faltenbalgtank oder Kolbenspeicher gewählt wird. Denkbar ist es ebenso das weitere Reformat über eine Zuleitung dem Ladeluftpfad der Verbrennungskraftmaschine zuzuführen und zwar bevorzugt strömungsabwärts des Ladeluftkühlers. Insbesondere im Fall von Stickstoff als weiteres Reformat erscheint dies möglich und sinnvoll zu sein.

Für den Reformierungsprozess innerhalb des zweiten Versorgungspfades muss, wie bereits vorstehend erläutert, ein bestimmtes Mindesttemperaturniveau der aktiven Oberflächen des Reformators bzw. des integrierten Katalysators überschritten werden. Daneben sollte auch der dem Reformierungsprozess zugeführte Primärkraftstoff bereits eine vorteilhafte Konditionierung aufweisen, damit eine möglichst hohe Konversionsrate vorliegt. Eine Konversionsrate von 1 bzw. 100 % würde im Fall der Verwendung von Ammoniak als Primärkraftstoff bedeuten, dass als erstes Reformat und damit als Sekundärkraftstoff reiner Wasserstoff zur Verfügung steht und das zweite Reformat reiner Stickstoff ist. Bevorzugt ist daher im erfindungsgemäßen System wenigstens ein Mittel zur Konditionierung des Primärkraftstoffes vor der Zuführung zur Reformierungsvorrichtung integriert. Insbesondere kann eine Vorerwärmung erforderlich oder zumindest sehr vorteilhaft sein. Für diesen Fall ist vorgesehen, stromaufwärts vor der Reformierungsvorrichtung wenigstens einen Wärmetauscher zu integrieren, um den durch seine Primärseite durchströmenden Primärkraftstoff auf ein gewünschtes Temperaturniveau oder zumindest in dessen Richtung oder über dieses Temperaturniveau hinaus anzuheben. Als Wärmeträger kann Gas oder Flüssigkeit durch die Sekundärseite dieses Wärmetauschers hindurchgeleitet werden. Denkbar ist beispielsweise, dass der Wärmetauscher durch das Flüssigkeitskühlmittel oder einen sonstigen Wärmeträger der Verbrennungskraftmaschine durchströmbar ist. Denkbar ist es auch, dass die auf der Sekundärseite eines Wärmetauschers zugeführte thermische Leistung aus dem Abgas entnommen wird. Insbesondere kann durch die Sekundärseite des Wärmetauschers ein Teil des Motorabgases hindurchgeleitet werden, das bereits stromaufwärts der Abgasnachbehandlungseinrichtung oder sogar bereits stromaufwärts der Turbine des Abgasturboladers von dem eigentlichen Abgaspfad ausgeleitet wird. Aufgrund der vergleichsweise geringen Menge des im zweiten Verbindungspfad strömenden Primärkraftstoffes ist das aus dem Abgasstrang entnommene Abgasvolumen vergleichsweise gering, sodass es keine oder nur unwesentlichen Performanceeinbußen bei der Abgasnachbehandlung und/oder bei der Ladeluftverdichtung mittels Turbolader entstehen.

Ebenso kann vorgesehen sein, dass die Reformierungsvorrichtung ein integrales Heizelement aufweist, um die aktiven Oberflächen des integralen Katalysators thermisch zu erwärmen. Erfindungsgemäß weist die Reformierungsvorrichtung die bereits vorgenannte Abgaszuführungsleitung auf, um der Reformierungsvorrichtung einen Teilvolumenstrom des Abgases der Verbrennungskraftmaschine zuzuführen.

Das durch die Reformierungsvorrichtung strömende Abgas führt zu einer thermischen Erwärmung der Oberflächen des integralen Katalysators, sodass der gesamte Reformierungsprozess in Gang gesetzt wird oder mit einer höheren Konversionsrate abläuft. Der besagte Teilvolumenstrom kann dabei bereits stromaufwärts der Abgasnachbehandlungseinrichtung oder sogar bereits stromaufwärts der Turbine des Abgasturboladers von dem eigentlichen Abgaspfad ausgeleitet werden. Aufgrund der vergleichsweise geringen Menge des Sekundärkraftstoffes und der damit einhergehenden klein dimensionierten Reformierungsvorrichtung ist der dafür benötigte abgezweigte Teilvolumenstrom des Motorabgases vergleichsweise gering, sodass auch dadurch keine Einbußen bei einer mittels Abgasturbolader aufgeladenen Verbrennungskraftmaschine und/oder der Abgasnachbehandlung zu erwarten sind.

Auch kann die durch die Reformierungsvorrichtung und/oder die durch die Sekundärseite des besagten Wärmetauschers zur Vorwärmung des Primärkraftstoffes durchströmte Abgasmenge ohne nachgeschaltete Behandlung der Ladeluft der Verbrennungskraftmaschine zugeführt werden, insbesondere ist keine weitere Kühlung dieses Abgasteilstroms notwendig, da diese Menge im Vergleich zur Ladeluftmenge verhältnismäßig gering ausfällt und so keine nennenswerte Temperaturerhöhung der in den Brennräumen eingelassenen Luft vorliegt.

Wie zuvor bereits mehrfach angedeutet, ist der Massenstrom des der Verbrennungskraftmaschine zugeführten Sekundärkraftstoffes deutlich geringer als der Massenstrom des Primärkraftstoffes. Im Nennbetrieb der Verbrennungskraftmaschine ist hier beispielsweise ein Verhältnis zwischen Primär- und Sekundärkraftstoff bezogen auf deren Energieeinträge von mindestens 10:1 und bis zu 50:1 möglich.

Die Kraftstoffversorgungseinrichtung kann weiterhin mit einer Einheit versehen sein, die zur Bestimmung einer optimalen Beimischungsrate des Sekundärkraftstoffes zu dem in den Brennraum der Verbrennungskraftmaschine zuzuführenden Primärkraftstoff konfiguriert ist. Die Bestimmung der Beimischungsrate erfolgt bspw. auf Grundlage einer hinterlegten Parametrierung und/oder Modellbildung. Insbesondere ist die optimale Beimischungsrate abhängig von aktuellen Betriebsbedingungen des Gesamtsystems, so dass für die Bestimmung der optimalen Beimischungsrate bspw. der aktuelle Betriebszustand des Verbrennungsprozesses in der Verbrennungskraftmaschine und/oder der Zustand der Abgasnachbehandlungsanlage berücksichtigt wird. Denkbar ist es auch die Qualität des Primärkraftstoffes zu erfassen. Nach Festlegung der optimalen Beimischungsrate kann eine Steuereinheit, die wiederum aus mehreren Steuerungen und Regelungen bestehen kann, dies aktuatorisch umsetzen.

Neben der erfindungsgemäßen Kraftstoffversorgungseinrichtung betrifft die vorliegende Erfindung ebenso ein System bzw. eine mobile oder stationäre Arbeitsmaschine oder ein Fahrzeug umfassend eine Kraftstoffversorgungseinrichtung gemäß der vorliegenden Erfindung, eine Verbrennungskraftmaschine sowie optional eine Abgasnachbehandlungseinrichtung. Die Vorteile und Eigenschaften des erfindungsgemäßen Systems mit der erfindungsgemäßen Kraftstoffversorgungseinrichtung wurden bereits vorstehend umfassend aufgezeigt, weshalb an dieser Stelle auf eine wiederholende Beschreibung verzichtet werden soll.

Die gestellte Aufgabe der vorliegenden Erfindung wird auch durch das korrespondierende Verfahren zur Kraftstoffversorgung gelöst, bei dem einer Verbrennungskraftmaschine als Hauptbrennstoff ein chemisch unbehandelter Primärkraftstoff zugeführt wird. Ein Teil des verfügbaren Primärkraftstoffes wird mittels einer Reformierungsvorrichtung in einen Sekundärkraftstoff reformiert, der einer Vorkammer der Verbrennungskraftmaschine zugeführt wird. Erfindungsgemäß wird über eine Abgaszuführungsleitung ein Abgasteilstrom des erzeugten Abgases der Verbrennungskraftmaschine durch die Reformierungsvorrichtung zur Erwärmung der aktiven Oberflächen des integralen Katalysators geführt. Vorteile des erfindungsgemäßen Verfahrens entsprechen denen der erfindungsgemäßen Kraftstoffversorgungseinrichtung. Insbesondere ist das erfindungsgemäße Verfahren mittels einer Kraftstoffversorgungseinrichtung gemäß der vorliegenden Erfindung ausführbar.

Gemäß einer bevorzugten Ausführung des Verfahrens kann vorgesehen sein, dass im Motorbetrieb die Beimischungsrate variierbar ist und bei sich ändernden Bedingungen eine fortlaufende Anpassung vorgesehen ist. Insbesondere kann vorgesehen sein, dass eine optimale Beimischungsrate des Sekundärkraftstoffes zu dem in den Brennraum der Verbrennungskraftmaschine zuzuführenden Primärkraftstoffes bestimmt wird. Die Bestimmung der Beimischungsrate erfolgt bspw. auf Grundlage einer hinterlegten Parametrierung und/oder Modellbildung. Insbesondere ist die optimale Beimischungsrate abhängig von aktuellen Betriebsbedingungen des Gesamtsystems, so dass für die Bestimmung der optimalen Beimischungsrate bspw. der aktuelle Betriebszustand des Verbrennungsprozesses in der Verbrennungskraftmaschine und/oder der Zustand der Abgasnachbehandlungsanlage und/oder die Qualität des Primärkraftstoffes berücksichtigt wird. Nach Festlegung der optimalen Beimischungsrate kann eine Steuereinheit, die wiederum aus mehreren Steuerungen und Regelungen bestehen kann, dies aktuatorisch umzusetzen.

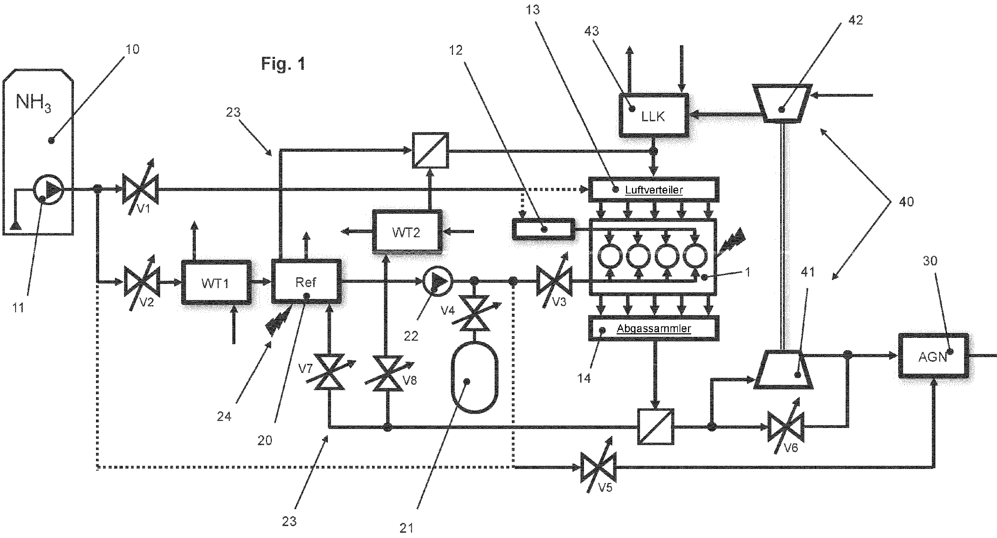

Weitere Vorteile und Eigenschaften sollen anhand der einzigen Figur näher beschrieben werden, wobei die einzige Figur unterschiedliche Ausführungen und Optionen der Erfindung darstellt.

Die einzige Figur zeigt ein Schaltbild eines Ausführungsbeispiels des erfindungsgemäßen Systems bestehend aus der Kraftstoffversorgungseinrichtung, der Zuführungsvorrichtung in verschiedenen Varianten ohne Anspruch auf Vollständigkeit. Die im Schaltbild vorhandenen Pfeile deuten die Flussrichtungen von Stoffströmen an. Durchgängige Linien symbolisieren die für jede Variante bestehenden Verbindungen, wohingegen unterbrochene Linienzüge optionale Alternativvarianten darstellen. Bereits vorwegnehmend sei erwähnt, dass das Vorhandensein eines Abgasturboladers 40 optional ist. Im Erfindungskern ist das Vorhandensein einer Abgasnachbehandlungseinrichtung 30 ebenfalls optional.

Beim Tankvorgang, der hier nicht näher zu betrachten ist, wird ein gasförmiger oder ein flüssiger Kraftstoff dem Primärkraftstoffspeicher 10 zugeführt. Dieser Kraftstoff wird im Folgetext als Primärkraftstoff bezeichnet. Bevorzugt handelt es sich bei dem Primärkraftstoff um einen Flüssigkraftstoff oder ein Niederdruckgas. Sofern es sich bei dem Primärkraftstoffspeicher 10 um einen Flüssig- oder Flüssiggasspeicher handelt, erfolgt bevorzugt eine erste Verdichtung des aus dem Primärkraftstoffspeicher 10 zu entnehmenden bzw. gerade entnommenen Primärkraftstoffes in seinem flüssigen Aggregatzustand. Besonders bevorzugt erfolgt dies über eine Förderpumpe 11, die entsprechend auf ihrer Oberdruckseite einen Druck bereitstellt, der wesentlich höher ist als dies zur Förderung des Primärkraftstoffes erforderlich ist und zwar auf ein Druckniveau von mindestens 50 bar. Sofern es sich bei dem Primärkraftstoffspeicher 10 um einen Flüssig- oder Flüssiggasspeicher handelt, ist ganz besonders bevorzugt die Förderpumpe 11 in dem Inneren des Primärkraftstoffspeicher s integriert. Möglich ist auch die Hinzunahme weiterer Pumpen (hier nicht dargestellt), um das gewünschte Druckniveau zu erreichen bzw. noch weiter zu erhöhen.

Vorteilhaft ist der Einsatz von NH₃ (Ammoniak) als Primärkraftstoff, welches unter einem Druck von ca. 9 bar und einer Temperatur von ca. 15° C eine volumetrische Energiedichte von 3,2 kwh/l aufweist. Zur Bewertbarkeit sei erwähnt, dass für die Speicherung von molekularem Wasserstoff unter 700 bar (15° C) lediglich eine volumetrisch Energiedichte von 1,3 kwh/l vorliegt und bei Dieselkraftstoff (15° C) 10 kWh/l.

In jeder Ausführungsform der Erfindung erfolgt die Weiterleitung des bereitgestellten Primärkraftstoffes über mindestens zwei parallele Kraftstoffzuführungspfade. Über einen ersten Pfad wird der aus dem Primärkraftstoffspeicher 10 entnommende Primärkraftstoff chemisch unverändert der Verbrennungskraftmaschine 1 zugeführt, bspw. in einen Hochdruckspeicher 12 eines Kraftstoff-Einspritzungssystems (in der Figur als Variante eingezeichnet), woraus der Primärkraftstoff direkt in die jeweiligen Brennräume der Verbrennungskraftmaschine 1 einspritzt wird. Alternativ kann der Primärkraftstoff auch in das Saugrohr 13 (als Variante eingezeichnet) oder in einen Luft-Gasmischer (nicht eingezeichnet) zugeführt werden. Das optionale Regelventil V1 regelt den Volumenstrom des Primärkraftstoffes zur Verbrennungskraftmaschine 1.

Über den zweiten dieser mindestens zwei Parallelpfade wird der Primärkraftstoff durch einen sogenannten Reformator 20 geleitet. Darin erfolgt das Abscheiden von molekularem Wasserstoff aus dem Primärkraftstoff. Dieser molekulare Wasserstoff oder ein Teil davon werden der Verbrennungskraftmaschine 1 zugeführt. Der Volumenstrom zum Reformator 20 kann mittels des Ventils V2 eingestellt werden.

Optional kann, wie in der Figur durch die gestrichelte Linie angedeutet, ein vom Primärkraftstoffspeicher 10 ausgehender dritter Parallelpfad existieren, über den der Primärkraftstoff unmittelbar oder mittelbar als Reduktionsmittel dienend der Abgasnachbehandlungseinrichtung 30 zugeführt wird. Sofern es sich bei dem Primärkraftstoff bspw. um Ammoniak (NH₃) handelt, ist alternativ seiner unmittelbaren Nutzung als Reduktionsmittel auch eine mittelbare Nutzung möglich, in dem - wie durch die entsprechende gestrichelte Linie angedeutet - durch die Reformierung erzeugter molekularer Wasserstoff als Reduktionsmittel zum Einsatz kommt. Als weitere Alternative könnte Primärkraftstoff längs des besagten dritten Parallelpfades über einen separaten Reformator (nicht eingezeichnet) mittelbar als Reduktionsmittel genutzt werden. Ein integriertes Steuerventil V5 dient zur Einstellung des Volumenstroms entweder aus dem Primärkraftstoffspeicher 10 oder dem Sekundärkraftstoffspeicher.

Unabhängig davon, ob Reduktionsmittel über den Reformator 20 bezogen wird oder nicht, eine Ausführungsform des erfindungsgemäßen Systems gar keinen Reduktionsmittel-Einsatz vorsieht oder in dieser Ausführungsform sein Reduktionsmittel aus einem separaten Tank bzw. aus einem separaten vorzugsweise im dritten Parallelpfad angeordneten Reformator bezieht, enthält das erfindungsgemäße System bevorzugt einen Sekundärkraftstoffspeicher 21 der besonders bevorzugt als Druckspeicher ausgeführt ist, der molekularen Wasserstoff aus dem Reformator 20 beziehen kann und von dem aus molekularer Wasserstoff der Verbrennungskraftmaschine 1 zugeführt werden kann. Der Sekundärkraftstoffspeicher 21 kann über ein weiteres Ventil V4 angebunden sein. Der Volumenstrom des Sekundärkraftstoffes vom Reformator 20 bzw. dem Sekundärkraftstoffspeicher 21 zur Verbrennungskraftmaschine kann mittels des optionalen Ventils V3 eingestellt werden.

Sofern die Abgasnachbehandlungseinrichtung 30 das Beziehen von über dem Reformator 20 freigesetzten molekularen Wasserstoff als Reduktionsmittel vorsieht, enthält das erfindungsgemäße System bevorzugt einen Speicher, der molekularen Wasserstoff aus dem Reformator 20 beziehen kann und von dem aus molekularer Wasserstoff der Abgasnachbehandlungseinrichtung 30 zugeführt werden kann. Besonders bevorzugt handelt es sich um einen gemeinsamen Speicher, aus dem der Verbrennungskraftmaschine 1 und der Abgasnachbehandlungseinrichtung 30 molekularer Wasserstoff zugeführt werden kann (vgl. Figur), der ganz besonders bevorzugt als Druckspeicher ausgeführt ist.

Das Vorhandensein derart angeordneter oder eines zur gemeinsamen Nutzung angeordneten Sekundärkraftstoffspeichers 21 hat den Vorteil, dass vorübergehend auch dann genügend molekularer Wasserstoff bereitgestellt werden kann, wenn der Reformator 20 nicht genügend oder gar keinen molekularen Wasserstoff freisetzen kann, z.B. bei einem Motorstart und während des Motorbetriebes vor Erreichung der Betriebstemperatur des Reformators 20.

Das Vorhandensein von gespeichertem molekularen Wasserstoff hat den Vorteil, dass dieser bei einem gewünschten Motorstart sofort verfügbar ist und nicht erst erzeugt werden muss. Darüber hinaus könnte der benötigte im Primärkraftstoff enthaltene Wasserstoff im Normalfall unter Ausnutzung von Motorabwärme reformiert werden, d.h. energetisch effizienter bereitgestellt werden als durch eine on-line Produktion bei ausgekühlter Verbrennungskraftmaschine 1, bei der die im Reformator 20 benötigte thermische Leistung unter einem direkten energetischen Mehrverbrauch aufgewendet werden müsste. Bei einem entsprechend grossen Vorrat im Sekundärkraftstoffspeicher 21 kann der Verbrennungskraftmaschine 1 solcher energetisch effizienter reformierte molekulare Wasserstoff solange bereitgestellt werden, bis die Verbrennungskraftmaschine 1 ihrerseits eine ausreichend hohe thermische Abgasenergie bereitstellen kann und bereits ferner vorrangig den thermischen Leistungsbedarf der Turbine 41 des Turboladers 40 und der Abgasnachbehandlungseinrichtung 30 abgedeckt hat.

Bevorzugt weist das erfindungsgemäße System mindestens einen Kompressor 22 auf, damit der vom Reformator 20 freigesetzte Wasserstoff der Verbrennungskraftmaschine 1 dem Sekundärkraftstoffspeicher 21 und/oder der Abgasnachbehandlungseinrichtung 30 unter erhöhtem Druck zugeführt werden kann. Im Ausführungsbeispiel verfügen die Brennräume der Verbrennungskraftmaschine 1 jeweils über eine Vorkammer, denen der molekularer Wasserstoff zugeführt wird. Bezogen auf den Energieinhalt ist im Nennbetrieb der Verbrennungskraftmaschine 1 die Menge des zugeführten Primärkraftstoffs in etwa 50 Mal so hoch als die des den Vorkammern zugeführten molekularen Wasserstoffes. Demnach kann der Reformator 20 des erfindungsgemäßen Systems um Grössenordnungen kleiner sein als ein Reformator, der den gesamten Kraftstoffbedarf einer vergleichbaren Verbrennungskraftmaschine 1 bereitstellt.

Damit in dem Reformator 20 aus dem zugeführten Primärkraftstoff eine Freisetzung des molekularen Wasserstoffs erfolgen kann und dies zudem mit einer ausreichend hohen Konversionsrate, müssen die Temperaturen der aktiven Oberflächen des Katalysators und der damit in Berührung kommende Primärkraftstoff ausreichend hoch sein. Im Ausführungsbeispiel wird dem Reformator 20 thermische Energie aus dem Abgas der Verbrennungskraftmaschine 1 zugeführt. Dabei wird dem Reformator 20 ein Abgasteilstrom 23 zugeleitet, wobei dieser Abgasteilstrom 23 bereits strömungsaufwärts der Turbine 41 des Abgasturboladers 40, d.h. möglichst unmittelbar am Abgassammler 14 entnommen wird. Das Ventil V7 dient zur Einstellung/Regelung des vom Abgassammler 14 entnommenen Volumenstroms.

Klarerweise müssen der sich durch den Reformator 20 erstreckende Abgasteilstrom 23 und der Kraftstoffpfad hermetisch voneinander getrennt sein. So können bspw. die aktiven Oberflächen des Katalysators auf einem Trägermaterial aufgebracht sein, welches über eine hohe thermische Leitfähigkeit mit den Wandflächen von dem mit Abgas durchströmten Kanal bzw. Kanalsystem verbunden ist.

Da im erfindungsgemäßen System in Bezug auf die Motorleistung lediglich eine vergleichsweise geringe Mengen an molekularem Wasserstoff benötigt wird, und der Reformator 20 entsprechend klein ausgelegt werden kann, ist der zum Beheizen des Reformators 20 benötigte Abgasmassenstrom sehr viel kleiner als der vom Ladeluftkühler 43 kommende Massenstrom der Ladeluft, weswegen der durch den Reformator 20 durchströmende Abgasteilstrom 23 thermodynamisch unproblematisch dem Ladeluftpfad zugemischt werden kann ist, auch dann, wenn man verbrennungstechnisch eigentlich keine Abgasrückführung wünscht. Ferner ist das weitere Abkühlen des Abgasteilstroms 23 auf ein Temperaturniveau, welches in etwa dem der Ladeluft am Zuströmungsort entspricht, auch nicht nötig. Bevorzugt befindet sich der Zuströmungsort des Abgasteilstroms in den Ladeluftpfad strömungsabwärts des Ladeluftkühlers 43. Zugleich ist die der Turbine 41 des Abgasturboladers 40 entzogene Abgasenergiemenge so niedrig, dass sich bei der Wirksamkeit der Aufladung der Verbrennungskraftmaschine 1 kein spürbares Nachlassen zeigt; insbesondere auch nicht bei dem sogenannten Turboloch, d.h. einem transienten Anstieg des Lastmomentes der Verbrennungskraftmaschine 1 bei geringer Kurbelwellendrehzahl. Bei Vorhandensein des besagten Sekundärkraftstoffspeichers 21 und einer darin vorhandenen entsprechenden Vorratsmenge kann bei einer niedrigen Kurbelwellendrehzahl der Verbrennungskraftmaschine 1 die Wasserstoff-Reformierung vorübergehend stillgelegt werden und demzufolge die gesamte Abgasmenge der Turbine 41 bereitgestellt werden. Ergänzend oder alternativ kann zur Beheizung des Reformators 20 anderweitig thermische Energie zugeführt werden, z.B. durch eine optionale elektrische Heizung 24.

Ferner kann strömungsaufwärts des Reformators 20 eine Konditionierung des Primärkraftstoffes sinnvoll bzw. notwendig sein, z.B. das Anheben oder Absenken auf ein bestimmtes Druckniveau und/oder eine Temperaturerhöhung auf eine bestimmtes bzw. in Richtung eines bestimmten Niveaus, etc. Stellvertretend hierfür zeigt das Ausführungsbeispiel einen Wärmetauscher WT1, der von dem Primärkraftstoff durchströmt wird, wobei der Temperaturkreis der Sekundärseite des Wärmetauscher WT1 nur angedeutet ist. Prinzipiell kann der Sekundärseite erwärmte Motorkühlflüssigkeit zugeführt werden oder Abgaswärme, z.B. auch über einen Zwischenkreis, der seine Wärme über einen im Abgaspfad bspw. strömungsabwärts der Abgasnachbehandlungseinrichtung 30 installierten Wärmetauscher (nicht eingezeichnet) bezieht. Die besagte Konditionierung des Primärkraftstoffes zum Reformator 20 kann selbstverständlich auch über mehre Stufen erfolgen, z.B. eine Kaskade von Wärmetauschern WT1 längs des zweiten Kraftstoffzuführungspfades zwischen dem Primärkraftstoffspeicher 10 und Reformator 20. Insbesondere kann die Sekundärseite des Wärmetauschern WT1 strömungsabwärts zu der Sekundärseite des im Reformator integrierten Wärmetauschers angeordnet sein (nicht eingezeichnet). Bei einer solchen Anordnung gelangt bevorzugt der Abgasteilstrom 23 vom Ausgang der Sekundärseite des Wärmetauschers WT1 in den Ladeluftpfad.

Optional verfügt das erfindungsgemäße System über eine weitere bzw. die eigentliche Abgasrückführung, die sich über das AGR-Ventil V8 und einen AGR-Kühler WT2 erstreckt.

Bei der Reformation des Primärkraftstoffs entstehen zwei sogenannte Reformate. Bei dem ersten Reformat handelt es sich idealerweise um reinen Wasserstoff und bei dem zweiten Reformat handelt es sich idealerweise um einen Stoff, der frei von Wasserstoff ist und zumindest im Allgemeinen keine direkte chemische Funktion mehr im erfindungsgemäßen System erfüllt. Wie erwähnt handelt es sich bei einer Verwendung von NH₃ als Primärkraftstoff bei dem zweiten Reformat um Stickstoff. Im erfindungsgemäßen System ist jedoch noch eine Nutzung der thermischen Energie des zweiten Reformats möglich. Bevorzugt wird ein solcher Primärkraftstoff verwendet, bei dem das zweite Reformat wieder ein Ausgangsstoff zur Reproduktion des Primärkraftstoffes ist, wobei klarerweise diese Reproduktion eine Hinzuführung von äusserer Energie erfordert und in aller Regel ausserhalb des Fahrzeuges erfolgt, in dem das erfindungsgemäße System zum Einsatz kommt.

Je nach Primärkraftstoff und je nach den Werkstoffen der aktiven Schicht des im Reformator 20 enthalten Katalysators ist ein bestimmtes Druckniveau und v.a. das Erreichen einer bestimmten Temperatur zur Erreichung einer hohen Konversionsrate nötig. Ausserhalb passender Betriebsbedingungen - insbesondere bei einem Kaltstart und der sich daran unmittelbar anschliessenden Betriebsphase der Verbrennungskraftmaschine - liegt beim Betreiben des Reformators 20 ein vergleichsweise hoher Schlupf des Primärkraftstoffs vor, was klarerweise dem Systemwirkungsgrad schadet und möglicherweise mindestens eine zusätzliche Massnahme entlang desjenigen Pfades erfordert, der idealerweise eigentlich nur durch das zweite Reformat durchströmt werden sollte. Im Fall, dass das zweite Reformat von einem Schlupf des Primärkraftstoffes begleitet wird und das zweite Reformat unter einer entsprechenden Reinheit an die Umgebung abgegeben werden darf und dies so gewünscht wird, ist als Massnahme eine entsprechende Nachbehandlung erforderlich. Bei bestehendem Risiko, dass die Konditionierung des Reformators 20 und des zugeführten Primärkraftstoffes nicht zu jeder Zeit einen für die vorgesehene Anwendung ausreichend hohen Reinheitsgrad des ersten Reformats, resp. des Sekundärkraftstoffes und/oder des zweiten Reformats absichert, sollte das erfindungsgemäße System mit dem besagten Sekundärkraftstoffspeicher 21 ausgestattet sein. Sodann kann der Sekundärkraftstoff übergangsweise aus diesem Speicher 21 bezogen werden, der später bei Vorliegen entsprechend passender Betriebsbedingungen wieder aufgefüllt werden kann.

Bei Erreichung der Betriebstemperatur einer für das erfindungsgemäße System vorgesehenen Verbrennungskraftmaschine 1 und diese bspw. als Wasserstoffmotor ausgeführt ist, liegen im Bereich des Abgassammlers 14 die Abgastemperaturen in einer Grössenordnung von 600° C bis 900° C. Für NH₃, das bereits erwähnte Beispiel eines bevorzugten Primärkraftstoffs, wird bei einem Reformator 20, dessen aktive Fläche aus Ruthenium besteht, bereits bei Temperaturen von 550° C eine Konversionsrate von ca. 95 % erreicht, d.h. es verbleibt ein NH₃-Schlupf von 5 %; bei einer Temperatur von 600° C handelt es sich bei dem ersten Reformat um nahezu reinen Wasserstoff. Unter Verwendung von weniger teuren Materialien, z.B. einer Nickel-Platin- oder einer Nickel-Palladium-Legierung ist zur Erzielung einer solchen Konversionsrate eine Temperatur von 650° C nötig.

NH₃ ist nicht zuletzt deshalb ein bevorzugter Primärkraftstoff, weil es sich bei dem zweiten Reformat um Stickstoff handelt und dessen Ablassen an die Umgebungsluft zulässig und unbedenklich ist, da die atmosphärische Luft zu ca. 79 % aus Stickstoff besteht. Strömungsaufwärts seines Austritts aus dem erfindungsgemäßen System kann das zweite Reformat über eine Vorrichtung zum Abbau des ggf. vorliegenden NH₃-Schlupfes vorhanden sein (nicht eingezeichnet), z.B. ein Oxidationskatalysator. Vorteilhaft ist die Ausstattung des Oxidationskatalysators mit einer Heizvorrichtung, zu der bei Bedarf externe Energie zugeführt wird, da vergleichsweise niedrige Temperaturen bei der Reformierung ursächlich für einen vergleichsweise hohen NH₃-Schlupf sind.

Mit dem erfindungsgemäßen System lassen sich durch entsprechende Anpassungen auch solche Primärkraftstoffe verwenden, bei denen das zweite Reformat nicht an die Umgebung abgegeben wird. In einem solchen Fall wird das erfindungsgemäße System mit einem weiteren Speicher (nicht dargestellt) ausgestattet, dem das zweite Reformat oder ggf. ein daraus mittels Nachbehandlung umgewandeltes Endprodukt zugeführt wird. Neben einer Betankung des Primärkraftstoffspeichers 10 ist dann klarerweise eine Entleerung jenes Speichers notwendig.

In einer vorteilhaften Ausführung wird das zweite Reformat bzw. das besagte Endprodukt quasi an demselben Ort gespeichert, an dem unmittelbar zuvor der Primärkraftstoff gespeichert worden ist, was bspw. durch die Verwendung eines Faltenbalgtanks oder eines Kolbenspeichers möglich ist. Dieses Grundprinzip stellt zur Nutzung bestimmter Primärkraftstoffe eine optionale Verbesserung des erfindungsgemäßen Systems dar. Sofern jedoch lediglich die Vorkammern mit dem Sekundärkraftstoff versorgt werden, derweil die Brennräume ausschliesslich mit dem Primärkraftstoff versorgt werden, wäre aufgrund der geringen anfallenden Menge des zweiten Reformats die Verhältnismässigkeit für den erhöhten Aufwand eines Faltenbalgtanks oder eines Kolbenspeichers anstelle eines kleinen separaten Tanks aus Kostengründen wohl nicht wirtschaftlich.

Das erfindungsgemäße System kann rein technisch selbstverständlich unabhängig davon betrieben werden, ob ein geeigneter Primärkraftstoff fossil oder regenerativ basiert hergestellt worden ist. Allerdings sieht die gewollte Nutzung des erfindungsgemäßen Systems den Einsatz von regenerativ erzeugtem Primärkraftstoff vor oder zumindest, dass die Herstellung überwiegend regenerativ basiert ist. An dieser Stelle sei erwähnt, dass es sich bei Methan nicht zwangsläufig um Erdgas, d.h. nicht zwangsläufig um eine fossile Ressource handelt. Durch die seit langem bekannte Möglichkeit den benötigten Wasserstoff (H₂) mittels Elektrolyse zu produzieren und der mittlerweile durchführbaren synthetischen Hydrierung von Kohlendioxid (CO₂), besteht mittlerweile auch eine Verfügbarkeit von regenerativ erzeugtem Methan (CH₄) ohne eines Einsatzes von Biomasse. Demzufolge kann davon ausgegangen werden, dass in absehbarer Zeit entsprechend längerkettige CH-Moleküle regenerativ basiert synthetisch herstellbar sein werden, die den Vorteil einer höheren Volumetrischen Energiedichte aufweisen und in dem erfindungsgemässen System verwendet werden können, welches entsprechend anzupassen ist.

In einer bevorzugten Ausführung lässt sich die Wasserstoff-Beimischungsrate der in den Brennraum zugeführten Kraftstoffkomponenten, d.h. dem Primärkraftstoff und dem Wasserstoff während des Motorbetriebs ändern, was besonders bevorzugt über eine entsprechende Software erfolgt, in der entsprechende Parametrierungen und/ oder Modellbildungen hinterlegt sind, wodurch eine jeweils optimale Wasserstoff-Beimischungsrate ermittelt wird, die dann aktuatorisch umgesetzt wird.

Das Ändern einer Wasserstoff-Beimischungsrate der in den Brennraum zugeführten Kraftstoffkomponenten schafft die Möglichkeit einer On-board Teilkompensation von ggf. vorliegenden Defiziten der Kraftstoffqualität (s.u.), die an der Systemgrenze zur Verfügung steht und kann darüber hinaus unter folgenden Situationen ebenfalls sehr vorteilhaft sein:
Sofern die Konstellation der momentanen bzw. in Kürze zu erwartender Temperaturen des Motorabgases und aktiver Oberflächen der Abgasnachbehandlungseinrichtung erwarten lassen, dass mindestens ein bestimmter Emissionsgrenzwert überschritten werden könnte bzw. überschritten werden wird, kann bereits proaktiv die dem Brennraum zugeführte Kraftstoff-Zusammensetzung verändert werden, um in Bezug auf die Systememissionen (bspw. den Emissionen eines Fahrzeugs) ein momentanes Defizit der Wirksamkeit der Abgasnachbehandlungseinrichtung 30 auszugleichen. Gegebenenfalls lässt sich durch diese erfindungsgemäße Möglichkeit, ohne Beeinträchtigung des Drehzahl-Drehmomenten-Arbeitspunktes der Verbrennungskraftmaschine 1 eine Reduzierung der Rohemissionen oder ein Skalierungseffekt der Abgasnachbehandlungseinrichtung 30 erzielen. Sofern die Verbrennungskraftmaschine 1 in einer Anwendung vergleichsweise selten im Arbeitsbereich maximaler und annähernd maximaler Emissionen betrieben werden muss, um bspw. kurzzeitig auftretende Maximalleistungen bereitstellen zu können und dabei zumindest ein Bestandteil der Abgasnachbehandlungseinrichtung 30 lediglich zur Abdeckung dieser vergleichsweise selten auftretenden Betriebssituationen in der nächstgrösseren Dimensionierung ausgelegt werden müsste, kann es in Summe vorteilhaft sein, auf Letzteres zu verzichten und während einer solchen Betriebssituationen unter Wasserstoff-Mehrverbrauch in Bezug auf die Systememissionen ein momentanes Defizit der Wirksamkeit der Abgasnachbehandlungseinrichtung 30 auszugleichen. Sofern ein gewisser Rückgang der Wirksamkeit der Abgasnachbehandlungseinrichtung 30 bereits detektiert oder prädiziert wird, und eine augenblickliche System-Stilllegung zur Servicedurchführung besonders ungünstig ist, weil bestimmte Arbeiten vorher beendet werden sollten etc., könnte ebenfalls die gleiche Betriebsstrategie angewendet werden, damit ein Weiterarbeiten unter Einhaltung der Emissionsgrenzwerte möglich ist.

Das erfindungsgemäße System kommt bevorzugt in Fahrzeugen bzw. mobilen Arbeitsmaschinen zum Einsatz. Möglich ist jedoch ebenso der Einsatz innerhalb stationärer Anlagen, z.B. für eine Genset-Anwendung, wo ein im Sinne der Erfindung als Primärkraftstoff geeigneter Energieträger quasi als Fliessgut zur Verfügung steht. Die Erfindung kann hierbei zur verbrennungsmotorischen Nutzung von Kraftstoffen (insbesondere sogenannter Schwachgase wie Klärgas, Deponiegas etc.) dienen, die anderweitig aufgrund ihrer geringen Qualität nicht genutzt werden können und in einem besonders ungünstigen Fall sogar energetisch ungenutzt als Treibhausgase in die Erdatmosphäre eintreten. Sofern ein kontinuierlicher Zufluss des Primärkraftstoffs zu dem erfindungsgemäßen System sichergestellt ist, kann ein Primärkraftstoffspeicher 10 zur Pufferung für den Primärkraftstoff entfallen. Erfindungsgemäß wird ein Teil des Primärkraftstoffes einem Reformator 20 zugeführt. Ggf. muss stromaufwärts des Reformators 20 eine Kraftstoffreinigung erfolgen, bspw., weil der Primärkraftstoff Verunreinigungen aufweist. Sofern ein Primärkraftstoffspeicher 10 zur Pufferung für den Primärkraftstoff vorhanden ist, erfolgt eine Kraftstoffreinigung vorzugsweise vor dem Eintritt in den Primärkraftstoffspeicher 10 bzw. vor dem Eintritt in das Speichervolumen innerhalb des Primärkraftstoffspeichers 10. In der Betrachtungsebene eines Schaltbildes bestehen beim Einsatz des erfindungsgemäßen Systems in einer mobilen und stationären Anwendung keine weiteren Unterschiede. Für den Stationäreinsatz zur Nutzung von Primärkraftstoffen von geringer Qualität kommt vorzugsweise die Ausführungsform der Erfindung zum Einsatz, bei der der vom Primärkraftstoff abgespaltene molekulare Wasserstoff in einer Vorkammer eingesetzt wird.

Die Vorteile der Erfindung lassen sich wie folgt nochmals zusammenfassen:
- Reduzierung der Prozessenergie zur On-board Aufbereitung des Primärkraftstoffes; die hohe Temperatur zur Dehydrierung im Reformator 20 kann aus dem Abgas bezogen werden, das unmittelbar am Abgassammler 14 entnommen wird. Da die Abgasmenge vergleichsweise gering ist, steht erstens noch eine ausreichend hohe Abgasenergie zur Versorgung der Turbine 41 des Turboladers 40 und die Wirksamkeit der Abgasnachbehandlungseinrichtung 30 bereit und muss zweitens diese Abgasmenge nicht in einer weiteren separaten Abgasnachbehandlungseinrichtung nachbehandelt werden, sondern kann diese Abgasmenge wieder dem Ladeluftpfad zugeführt werden.
- Da im erfindungsgemäßen System nur ein bestimmter Anteil des Primärkraftstoffs durch den Reformator 20 geleitet wird bzw. den Reformationsprozess durchläuft, derweil der höhere Anteil des Primärkraftstoffs direkt von der Verbrennungskraftmaschine 1 verwertet wird, ist die Menge des zweiten Reformats, d.h. das Abscheideprodukt des Reformators, wofür On-board keine weitere Verwendung existiert, deutlich geringer. (N.B.: Üblicherweise handelt es sich bei dem Abscheideprodukt nicht um Abfall, sondern um recycelbares Trägermedium, welches beim nächsten Tankvorgang entnommen wird.) Demzufolge genügt eine wesentlich geringere Aufnahmekapazität zur Aufnahme des zweiten Reformats.
- Es muss lediglich ein einziger Kraftstoff getankt werden.
- Bei einer entsprechenden Bauform der Verbrennungskraftmaschine 1 (i) der Ausstattung der Hauptbrennräume mit jeweils einer Vorkammer kann mit Wasserstoff ein besonders zündfähiger Kraftstoff zur Auslösung der Sekundärzündung verwendet werden
- Das erfindungsgemäße System kann für den Abbau der Stickoxide mit einem solchen Katalysator ausgestattet werden, bei dem Wasserstoff als Reduktionsmittel verwendet werden kann. Auf diese Weise kann das manuelle Zuführen des Reduktionsmittels als weiterer Betriebsstoff entfallen. Es können Kraftstoffe verwendet werden, die gleichzeitig die Funktion des Reduktionsmittels übernehmen können.

### Bezugszeichenliste

| | |
|---|---|
| Verbrennungskraftmaschine | 1 |
| Primärkraftstoffspeicher | 10 |
| Kraftstoffförderpumpe | 11 |
| Kraftstoff-Hochdruckeinspritzungssystem | 12 |
| Luftverteiler | 13 |
| Abgassammler | 14 |
| Reformator | 20 |
| Sekundärkraftstoffspeicher | 21 |
| Kompressor | 22 |
| Abgasteilstrom | 23 |
| Elektrische Heizung | 24 |
| Abgasnachbehandlungseinrichtung | 30 |
| Turbolader | 40 |
| Turbine | 41 |
| Kompressor | 42 |
| Ladeluftkühler | 43 |
| Ventile | V1, V2, V3, V4, V5, V7, |
| Wastegate | V6 |
| AGR-Ventil | V8 |
| Wärmetauscher | WT1, WT2 |

## Patentansprüche

1. Kraftstoffversorgungseinrichtung zum Zuführen eines Kraftstoffs an eine Verbrennungskraftmaschine (1), umfassend
einen Kraftstoffspeicher (10) zur Speicherung eines Primärkraftstoffes und wenigstens zwei parallele Kraftstoffzuführungspfade, die einerseits mit dem Kraftstoffspeicher (10) und andererseits mit der Verbrennungskraftmaschine (1) verbunden sind, wobei
mittels des ersten Kraftstoffzuführungspfad der Primärkraftstoff aus dem Kraftstoffspeicher (10) der Verbrennungskraftmaschine (1) zum Zwecke der Verbrennung zuführbar ist, und
der zweite Kraftstoffzuführungspfad wenigstens eine Reformierungsvorrichtung (20) aufweist, mittels dieser der aus dem Primärkraftstoffspeicher (10) zugeführte Primärkraftstoff in einen Sekundärkraftstoff reformierbar ist, und zumindest ein Teil des erzeugten Sekundärkraftstoffes der Verbrennungskraftmaschine (1) zum Zwecke der Verbrennung zuführbar ist, wobei der Sekundärkraftstoff in eine Vorkammer der Verbrennungskraftmaschine (1) zuführbar ist, **dadurch gekennzeichnet, dass** eine Abgaszuführungsleitung vorgesehen ist, über die ein Abgasteilstrom (23) des erzeugten Abgases der Verbrennungskraftmaschine (1) durch die Reformierungsvorrichtung (20) zur Erwärmung der aktiven Oberflächen des integralen Katalysators durchleitbar ist.

2. Kraftstoffversorgungseinrichtung nach Anspruch 1, **dadurch gekennzeichnet, dass** der Sekundärkraftstoff unter Ausbildung eines stöchiometrisch ausgeglichenen Sekundärkraftstoff-Luftverhältnisses oder unter Ausbildung eines Überschusses des Sekundärkraftstoffes, d.h. einem Lambdawert kleiner oder deutlich kleiner als 1 zuführbar ist.

3. Kraftstoffversorgungseinrichtung nach einem der vorstehenden Ansprüche, **dadurch gekennzeichnet, dass** der Primärkraftstoff mittels des ersten Verbindungspfades einem Einspritzsystem der Verbrennungskraftmaschine (1) und/oder einem Saugrohr (13) der Verbrennungskraftmaschine (1) und/oder einem Luft-/Kraftstoffmischer zuführbar ist.

4. Kraftstoffversorgungseinrichtung nach einem der vorstehenden Ansprüche, **dadurch gekennzeichnet, dass** wenigstens ein dritter Kraftstoffzuführungspfad vorgesehen ist, der den Primärkraftstoffspeicher (10) mit einer Abgasnachbehandlungseinrichtung (30) verbindet, um den Primärkraftstoff unbehandelt oder mittels einer in den dritten Kraftstoffzuführungspfad integrierten zusätzlichen Reformierungsvorrichtung (20') reformiert als Reduktionsmittel zuzuführen.

5. Kraftstoffversorgungseinrichtung nach einem der vorstehenden Ansprüche, **dadurch gekennzeichnet, dass** stromabwärts nach der Reformierungsvorrichtung (20) ein Sekundärkraftstoffspeicher (21), insbesondere ein Druckspeicher, zur Speicherung des reformierten Sekundärkraftstoffes vorgesehen ist und/oder wenigstens ein Kompressor/Pumpe (22) enthalten ist, um den reformierten Sekundärkraftstoff unter erhöhtem Druck der Verbrennungskraftmaschine (1) und/oder dem Sekundärkraftstoffspeicher (21) und/oder einer Abgasnachbehandlungseinrichtung (30) zuführen zu können.

6. Kraftstoffversorgungseinrichtung nach einem der vorstehenden Ansprüche, **dadurch gekennzeichnet, dass** der zweite Kraftstoffzuleitungspfad stromabwärts nach der Reformierungsvorrichtung (20) wenigstens einen Abzweig aufweist, um den reformierten Sekundärkraftstoff als Reduktionsmittel einer Abgasnachbehandlungsanlage (30) bereitstellen zu können, wobei der Sekundärkraftstoff der Abgasnachbehandlungsanlage (30) unmittelbar von der Reformierungsvorrichtung (20) und/oder aus dem Sekundärkraftstoffspeicher (21) bereitstellbar ist.

7. Kraftstoffversorgungseinrichtung nach einem der vorstehenden Ansprüche, **dadurch gekennzeichnet, dass** der Primärkraftstoff in Flüssigform oder Gasform im Primärkraftstoffspeicher (10) gespeichert bzw. speicherbar ist, wobei es sich bevorzugt um ein im Primärkraftstoffspeicher (10) gespeichertes Flüssiggas handelt, beispielsweise um Ammoniak, und/oder der reformierte Sekundärkraftstoff molekularer Wasserstoff ist.

8. Kraftstoffversorgungseinrichtung nach Anspruch 7, **dadurch gekennzeichnet, dass** bei einem als Flüssiggas gespeicherten Primärkraftstoff Mittel zur Verdichtung des in Flüssigform vorliegenden Primärkraftstoffes vorgesehen sind, bevorzugt in Form einer Pumpe, die besonders bevorzugt zugleich als Primärkraftstoffförderpumpe fungiert und die ganz besonders bevorzugt in dem Primärkraftstofftank (10) integriert ist.

9. Kraftstoffversorgungseinrichtung nach einem der vorstehenden Ansprüche, **dadurch gekennzeichnet, dass** stromaufwärts der Reformierungsvorrichtung (20) wenigstens ein Mittel zur Konditionierung des Primärkraftstoffes für die nachfolgende Reformation integriert ist, bspw. in Form eines Wärmetauschers (WT1) zur Optimierung des Temperaturniveaus des Primärkraftstoffes und/oder zur Anpassung des Druckniveaus des Primärkraftstoffes bspw. in Form eines Kompressors bzw. einer Förderpumpe oder eines Druckminderers.

10. Kraftstoffversorgungseinrichtung nach einem der vorstehenden Ansprüche, **dadurch gekennzeichnet, dass** über die Abgaszuführungsleitung ein Abgasteilstrom (23) des erzeugten Abgases der Verbrennungskraftmaschine (1) durch die Sekundärseite eines stromaufwärts der Reformierungsvorrichtung (20) vorhandenen Wärmetauschers (WT1) durchleitbar ist.

11. Kraftstoffversorgungseinrichtung nach Anspruch 10, **dadurch gekennzeichnet, dass** die Entnahme des Abgasteilstroms (23) am bzw. unmittelbar stromabwärts eines Abgassammlers (14) der Verbrennungskraftmaschine (1) erfolgt, bevorzugt stromaufwärts der Abgasnachbehandlungseinrichtung (30), insbesondere stromaufwärts der Turbine (41) des Abgasturboladers (40).

12. Kraftstoffversorgungseinrichtung nach oder 11, **dadurch gekennzeichnet, dass** der durch die Reformierungsvorrichtung (20) und/oder die Sekundärseite des Wärmetauschers (WT1) durchgeführte Abgasteilstrom (23) in den Ladeluftpfad der Verbrennungskraftmaschine (1) geleitet wird, bevorzugt stromabwärts eines Ladeluftkühlers (43) des Ladeluftpfades.

13. Kraftstoffversorgungseinrichtung nach einem der vorstehenden Ansprüche, **dadurch gekennzeichnet, dass** die Kraftstoffversorgungseinrichtung und/oder die Reformierungsvorrichtung (20) wenigstens ein zusätzliches Speichermittel zur Speicherung wenigstens eines zusätzlichen aus dem Primärkraftstoff erzeugten weiteren Reformats aufweist, wobei das Speichermittel vorzugsweise Bestandteil eines als Faltenbalgtank oder Kolbenspeicher ausgeführten Primärkraftstoffspeichers (10) sein kann und/oder die Reformierungsvorrichtung eine Zuleitung vorsieht, um das weitere Reformat dem Ladeluftpfad zuzuführen, bevorzugt stromabwärts eines Ladeluftkühlers (43) des Ladeluftpfades.

14. Kraftstoffversorgungseinrichtung nach einem der vorstehenden Ansprüche, **dadurch gekennzeichnet, dass** der der Verbrennungskraftmaschine (1) zugeführte Kraftstoff im Nennbetrieb ein Verhältnis zwischen Primär- und Sekundärkraftstoff bezogen auf deren Energieinhalt von mindestens 10:1 bis hin zu 50:1 hat.

15. System umfassend eine Kraftstoffversorgungseinrichtung gemäß einem der vorstehenden Ansprüche, eine Verbrennungskraftmaschine (1) sowie optional eine Abgasnachbehandlungseinrichtung (30) und/oder eine Turboaufladung und/oder einer Abgasrückführung deren Abgasrückführungsrate über ein AGR-Ventil (V8) einstellbar ist.

16. Verfahren zur Kraftstoffversorgung einer Verbrennungskraftmaschine (1) aus einem Primärkraftstofftank (10), wobei der Verbrennungskraftmaschine (1) als Hauptbrennstoff chemisch unbehandelter Primärkraftstoff zugeführt wird und ein Teil des verfügbaren Primärkraftstoffes mittels einer Reformierungsvorrichtung (20) in einen Sekundärkraftstoff reformiert wird, und wobei der Sekundärkraftstoff einer Vorkammer der Verbrennungskraftmaschine (1) zugeführt wird, **dadurch gekennzeichnet, dass** über eine Abgaszuführungsleitung ein Abgasteilstrom (23) des erzeugten Abgases der Verbrennungskraftmaschine (1) durch die Reformierungsvorrichtung (20) zur Erwärmung der aktiven Oberflächen des integralen Katalysators geführt wird.

17. Verfahren nach Anspruch 16, **dadurch gekennzeichnet, dass** das Verfahren mittels einer Kraftstoffversorgungseinrichtung gemäß einem der vorstehenden Ansprüche 1 bis 14 ausgeführt wird.

## Claims

1. Fuel supply device for supplying a fuel to an internal combustion engine (1), comprising
a fuel storage tank (10) for storing a primary fuel,
and at least two parallel fuel supply paths which are connected on the one hand to the fuel storage tank (10) and on the other hand to the internal combustion engine (1), wherein
by means of the first fuel supply path the primary fuel from the fuel storage tank (10) can be supplied to the internal combustion engine (1) for the purpose of combustion, and
the second fuel supply path has at least one reforming device, by means of which the primary fuel supplied from the primary fuel storage tank (10) can be reformed into a secondary fuel, and at least a part of the generated secondary fuel can be supplied to the internal combustion engine (1) for the purpose of combustion, wherein the secondary fuel can be supplied into a pre-chamber of the internal combustion engine (1),
**characterized in that** an exhaust gas supply line is provided via which a partial exhaust gas stream (23) of the generated exhaust gas of the internal combustion engine (1) can be guided through the reforming device (20) for heating the active surfaces of the integral catalyst.

2. Fuel supply device according to claim 1, **characterized in that** the secondary fuel can be supplied with formation of a stoichiometrically balanced secondary fuel-air ratio or with formation of an excess of the secondary fuel, i.e. a lambda value less than or significantly less than 1.

3. Fuel supply device according to one of the preceding claims, **characterized in that** the primary fuel by means of the first connecting path can be supplied to an injection system of the internal combustion engine (1) and/or an intake manifold (13) of the internal combustion engine (1) and/or an air/fuel mixer.

4. Fuel supply device according to one of the preceding claims, **characterized in that** at least one third fuel supply path is provided which connects the primary fuel storage tank (10) with an exhaust aftertreatment system (30) in order to supply the primary fuel untreated or reformed by means of an additional reforming device (20') integrated into the third fuel supply path as reducing agent.

5. Fuel supply device according to one of the preceding claims, **characterized in that** downstream after the reforming device (20) a secondary fuel storage device (21), in particular a pressure accumulator, for storing the reformed secondary fuel is provided and/or at least one compressor/pump (22) is contained in order to be able to supply the reformed secondary fuel under increased pressure to the internal combustion engine (1) and/or the secondary fuel storage device (21) and/or an exhaust aftertreatment system (30).

6. Fuel supply device according to one of the preceding claims, **characterized in that** the second fuel supply path has downstream after the reforming device (20) at least one branch in order to be able to provide the reformed secondary fuel as reducing agent to an exhaust aftertreatment system (30), wherein the secondary fuel can be provided to the exhaust aftertreatment system (30) directly from the reforming device (20) and/or from the secondary fuel storage device (21).

7. Fuel supply device according to one of the preceding claims, **characterized in that** the primary fuel is stored or can be stored in liquid form or gaseous form in the primary fuel storage tank (10), wherein it is preferably a liquefied gas stored in the primary fuel storage tank (10), for example ammonia, and/or the reformed secondary fuel is molecular hydrogen.

8. Fuel supply device according to claim 7, **characterized in that** in the case of a primary fuel stored as a liquefied gas, means for compressing the primary fuel present in liquid form are provided, preferably in the form of a pump which particularly preferably at the same time functions as primary fuel feed pump and which quite particularly preferably is integrated in the primary fuel tank (10).

9. Fuel supply device according to one of the preceding claims, **characterized in that** upstream of the reforming device (20) at least one means for conditioning the primary fuel for the subsequent reforming is integrated, for example in the form of a heat exchanger (WT1) for optimizing the temperature level of the primary fuel and/or for adapting the pressure level of the primary fuel, for example in the form of a compressor or a feed pump or a pressure reducer.

10. Fuel supply device according to one of the preceding claims, **characterized in that** via the exhaust gas supply line a partial exhaust gas stream (23) of the generated exhaust gas of the internal combustion engine (1) can be guided through the secondary side of a heat exchanger (WT1) present upstream of the reforming device (20).

11. Fuel supply device according to claim 10, **characterized in that** the tapping of the partial exhaust gas stream (23) occurs at or immediately downstream of an exhaust manifold (14) of the internal combustion engine (1), preferably upstream of the exhaust aftertreatment system (30), in particular upstream of the turbine (41) of the exhaust-gas turbocharger (40).

12. Fuel supply device according to or 11, **characterized in that** the partial exhaust gas stream (23) guided through the reforming device (20) and/or the secondary side of the heat exchanger (WT1) is guided into the charge-air path of the internal combustion engine (1), preferably downstream of a charge air cooler (43) of the charge-air path.

13. Fuel supply device according to one of the preceding claims, **characterized in that** the fuel supply device and/or the reforming device (20) has at least one additional storage means for storing at least one additional further reformate generated from the primary fuel, wherein the storage means can preferably be a component of a primary fuel storage tank (10) designed as bellows tank or piston accumulator and/or the reforming device provides a supply line in order to supply the further reformate to the charge-air path, preferably downstream of a charge air cooler (43) of the charge-air path.

14. Fuel supply device according to one of the preceding claims, **characterized in that** the fuel supplied to the internal combustion engine (1) in rated operation has a ratio between primary and secondary fuel with respect to their energy content of at least 10:1 up to 50:1.

15. System comprising a fuel supply device according to one of the preceding claims, an internal combustion engine (1) as well as optionally an exhaust aftertreatment system (30) and/or a turbocharging and/or an exhaust gas recirculation whose exhaust gas recirculation rate can be set via an EGR valve (V8).

16. Method for fuel supply of an internal combustion engine (1) from a primary fuel tank (10), wherein the internal combustion engine (1) is supplied as main fuel with chemically untreated primary fuel and a part of the available primary fuel is reformed by means of a reforming device (20) into a secondary fuel, and wherein the secondary fuel is supplied to a pre-chamber of the internal combustion engine (1), **characterized in that** via an exhaust gas supply line a partial exhaust gas stream (23) of the generated exhaust gas of the internal combustion engine (1) is guided through the reforming device (20) for heating the active surfaces of the integral catalyst.

17. Method according to claim 16, **characterized in that** the method is carried out by means of a fuel supply device according to one of the preceding claims 1 to 14.

## Revendications

1. Dispositif d'alimentation en carburant destiné à alimenter une machine à combustion interne (1) en carburant, comprenant
un réservoir de carburant (10) pour le stockage d'un carburant primaire et au moins deux voies parallèles d'amenée de carburant, qui sont reliées d'une part au réservoir de carburant (10) et d'autre part à la machine à combustion interne (1), dans lequel
au moyen de la première voie d'amenée de carburant, le carburant primaire peut être amené depuis le réservoir de carburant (10) vers la machine à combustion interne (1) à des fins de combustion, et
la deuxième voie d'amenée de carburant comporte au moins un dispositif de reformage (20), au moyen duquel le carburant primaire amené depuis le réservoir de carburant primaire (10) peut être reformé en un carburant secondaire, et au moins une partie du carburant secondaire produit peut être amenée à la machine à combustion interne (1) à des fins de combustion, le carburant secondaire pouvant être amené dans une préchambre de la machine à combustion interne (1),
**caractérisé en ce qu'**une conduite d'amenée des gaz d'échappement est prévue, par laquelle un flux partiel de gaz d'échappement (23) des gaz d'échappement produits par la machine à combustion interne (1) peut être conduit à travers le dispositif de reformage (20) pour chauffer les surfaces actives du catalyseur monolithique.

2. Dispositif d'alimentation en carburant selon la revendication 1, **caractérisé en ce que** le carburant secondaire peut être amené avec établissement d'un rapport carburant secondaire/air stœchiométriquement équilibré ou avec établissement d'un excès de carburant secondaire, c'est-à-dire avec une valeur lambda inférieure à 1 ou nettement inférieure à 1.

3. Dispositif d'alimentation en carburant selon l'une quelconque des revendications précédentes, **caractérisé en ce que** le carburant primaire peut être amené, au moyen de la première voie de liaison, à un système d'injection de la machine à combustion interne (1) et/ou à une tubulure d'admission (13) de la machine à combustion interne (1) et/ou à un mélangeur air/carburant.

4. Dispositif d'alimentation en carburant selon l'une quelconque des revendications précédentes, **caractérisé en ce qu'**au moins une troisième voie d'amenée de carburant est prévue, reliant le réservoir de carburant primaire (10) à un dispositif de post-traitement des gaz d'échappement (30), afin d'amener le carburant primaire à l'état non traité ou, reformé au moyen d'un dispositif de reformage supplémentaire (20') intégré dans la troisième voie d'amenée de carburant, comme agent réducteur.

5. Dispositif d'alimentation en carburant selon l'une quelconque des revendications précédentes, **caractérisé en ce que**, en aval du dispositif de reformage (20), un réservoir de carburant secondaire (21), en particulier un réservoir sous pression, est prévu pour le stockage du carburant secondaire reformé et/ou qu'au moins un compresseur/pompe (22) est présent afin de pouvoir amener le carburant secondaire reformé sous pression accrue vers la machine à combustion interne (1) et/ou vers le réservoir de carburant secondaire (21) et/ou vers un dispositif de post-traitement des gaz d'échappement (30).

6. Dispositif d'alimentation en carburant selon l'une quelconque des revendications précédentes, **caractérisé en ce que** la deuxième voie d'alimentation en carburant comporte, en aval du dispositif de reformage (20), au moins une dérivation afin de pouvoir mettre le carburant secondaire reformé à disposition comme agent réducteur pour un dispositif de post-traitement des gaz d'échappement (30), le carburant secondaire pouvant être mis à disposition du dispositif de post-traitement des gaz d'échappement (30) directement par le dispositif de reformage (20) et/ou à partir du réservoir de carburant secondaire (21).

7. Dispositif d'alimentation en carburant selon l'une quelconque des revendications précédentes, **caractérisé en ce que** le carburant primaire est ou peut être stocké sous forme liquide ou gazeuse dans le réservoir de carburant primaire (10), celui-ci étant de préférence un gaz liquéfié stocké dans le réservoir de carburant primaire (10), par exemple de l'ammoniac, et/ou **en ce que** le carburant secondaire reformé est de l'hydrogène moléculaire.

8. Dispositif d'alimentation en carburant selon la revendication 7, **caractérisé en ce que**, dans le cas d'un carburant primaire stocké sous forme de gaz liquéfié, des moyens de compression du carburant primaire présent sous forme liquide sont prévus, de préférence sous la forme d'une pompe, qui sert très préférablement en même temps de pompe d'alimentation en carburant primaire et qui, tout particulièrement de préférence, est intégrée dans le réservoir de carburant primaire (10).

9. Dispositif d'alimentation en carburant selon l'une quelconque des revendications précédentes, **caractérisé en ce qu'**en amont du dispositif de reformage (20), au moins un moyen de conditionnement du carburant primaire pour le reformage subséquent est intégré, par exemple sous la forme d'un échangeur de chaleur (WT1) pour l'optimisation du niveau de température du carburant primaire et/ou pour l'adaptation du niveau de pression du carburant primaire, par exemple sous la forme d'un compresseur ou d'une pompe d'alimentation, ou d'un détendeur.

10. Dispositif d'alimentation en carburant selon l'une quelconque des revendications précédentes, **caractérisé en ce que**, via la conduite d'amenée des gaz d'échappement, un flux partiel de gaz d'échappement (23) des gaz d'échappement produits par la machine à combustion interne (1) peut être conduit à travers le côté secondaire d'un échangeur de chaleur (WT1) disposé en amont du dispositif de reformage (20).

11. Dispositif d'alimentation en carburant selon la revendication 10, **caractérisé en ce que** le prélèvement du flux partiel de gaz d'échappement (23) s'effectue au niveau ou immédiatement en aval d'un collecteur d'échappement (14) de la machine à combustion interne (1), de préférence en amont du dispositif de post-traitement des gaz d'échappement (30), en particulier en amont de la turbine (41) du turbocompresseur d'échappement (40).

12. Dispositif d'alimentation en carburant selon la revendication 10 ou 11, **caractérisé en ce que** le flux partiel de gaz d'échappement (23) conduit à travers le dispositif de reformage (20) et/ou le côté secondaire de l'échangeur de chaleur (WT1) est dirigé vers le circuit d'air de suralimentation de la machine à combustion interne (1), de préférence en aval d'un refroidisseur d'air de suralimentation (43) du circuit d'air de suralimentation.

13. Dispositif d'alimentation en carburant selon l'une quelconque des revendications précédentes, **caractérisé en ce que** le dispositif d'alimentation en carburant et/ou le dispositif de reformage (20) comporte au moins un moyen de stockage supplémentaire pour le stockage d'au moins un reformât supplémentaire produit à partir du carburant primaire, le moyen de stockage pouvant de préférence faire partie d'un réservoir de carburant primaire (10) réalisé sous la forme d'un réservoir à soufflet ou d'un accumulateur à piston, et/ou **en ce que** le dispositif de reformage prévoit une conduite d'amenée afin d'amener le reformât supplémentaire au circuit d'air de suralimentation, de préférence en aval d'un refroidisseur d'air de suralimentation (43) du circuit d'air de suralimentation.

14. Dispositif d'alimentation en carburant selon l'une quelconque des revendications précédentes, **caractérisé en ce que** le carburant amené à la machine à combustion interne (1) présente, en régime nominal, un rapport entre carburant primaire et carburant secondaire, rapporté à leur contenu énergétique, d'au moins 10:1 jusqu'à 50:1.

15. Système comprenant un dispositif d'alimentation en carburant selon l'une quelconque des revendications précédentes, une machine à combustion interne (1), ainsi qu'en option un dispositif de post-traitement des gaz d'échappement (30) et/ou une suralimentation par turbocompresseur et/ou un système de recirculation des gaz d'échappement dont le taux de recirculation des gaz d'échappement est réglable par une vanne EGR (V8).

16. Procédé d'alimentation en carburant d'une machine à combustion interne (1) à partir d'un réservoir de carburant primaire (10), dans lequel **il** est amené à la machine à combustion interne (1), comme combustible principal, du carburant primaire chimiquement non traité et une partie du carburant primaire disponible est reformée, au moyen d'un dispositif de reformage (20), en un carburant secondaire, et dans lequel le carburant secondaire est amené à une préchambre de la machine à combustion interne (1), **caractérisé en ce que**, via une conduite d'amenée des gaz d'échappement, un flux partiel de gaz d'échappement (23) des gaz d'échappement produits par la machine à combustion interne (1) est conduit à travers le dispositif de reformage (20) pour chauffer les surfaces actives du catalyseur monolithique.

17. Procédé selon la revendication 16, **caractérisé en ce que** le procédé est exécuté au moyen d'un dispositif d'alimentation en carburant selon l'une quelconque des revendications 1 à 14 précédentes.
